Europäisches Patentamt

European Patent Office

Office européen des brevets

(19)

(11) Publication number: **0 140 265**
**A2**

# (12) EUROPEAN PATENT APPLICATION

(21) Application number: **84112391.2**

(22) Date of filing: **13.10.84**

(51) Int. Cl.⁴: **F 16 N 13/16**
**F 16 N 7/38**

(30) Priority: **28.10.83 IT 2351483**

(43) Date of publication of application:
**08.05.85 Bulletin 85/19**

(84) Designated Contracting States:
**AT BE DE FR GB NL SE**

(71) Applicant: DROPSA S.p.A.
Via Massimiano 25
I-20134 Milano(IT)

(72) Inventor: Divisi, Gualtiero
Via F.lli Cervi
I-20090 Segrate Milano 2(IT)

(74) Representative: Luksch, Giorgio, Dr.-Ing. et al,
Ing. A. Giambrocono & C. S.r.l. Via Rosolino Pilo, 19/b
I-20129 Milano(IT)

(54) An apparatus for airless metered spray lubrication.

(57) The apparatus provides for airless metered lubri-
cation of machinery members such as for example large
gears chains etc., and comprises a nozzle which is rotatable
through 180° (either manually or by drive means) for
allowing cleaning operation thereof; a differential piston
pump operated by pressure fluid for supply of high pressure
lubricant to said nozzle; a slide or distributing valve alter-
nately connecting to pump with either the nozzle or a
pressure lubricant supply; and means for controlling the
pump movement speed.

EP 0 140 265 A2

Croydon Printing Company Ltd.

./...

Fig. 1

0140265

AN APPARATUS FOR AIRLESS METERED SPRAY LUBRICATION

The invention relates to a spray lubrication apparatus capable of using even very solid greases.

Conventional devices providing for spray lubrication also referred to as sprayers, have a nozzle simultaneously supplied with compressed air and lubricant.

It has been found that these devices have the disadvantage of not providing a suitable uniform division of the lubricant thus producing a notable amount of coarse particles which are thereby not sufficiently fast to arrive at use location; such particles fall down as unused on the surrounding area and therefore are a remarkable source of losses.

On the other hand, it is the object of the present invention to provide an apparatus for substantial elimination of such lubricant losses, since the fine particles comprising the spray all have substantially the required speed to arrive at the use location, this because of using very high speed airless spray.

It is a further important object of this invention to provide an apparatus enabling a full control of the working cycle.

In order to achieve the above objects, in addition to further objects, which will become more apparent from the following detailed description, the invention provides a lubricating apparatus comprising a sprayer nozzle; a differential piston pump operated by pressure fluid for supplying such a nozzle with very high pressure lubricant; and a slide or

- 2 -

0140265

distributing valve alternately connecting the pump either with the nozzle or a source of pressure lubricant.

According to an important feature of the invention, in order to avoid any irregularities in lubricant airless spray, as due to the presence of foreign bodies or foulings in the nozzle, it is provided that said nozzle can be rotated through 180° about an axis perpendicular to the nozzle axis by either manual means or a pneumatic motor.

According to a particular important aspect of the invention, means are provided for controlling the speed of the active stroke of the pump and hence of the spray to avoid that in case of a too low speed thereof the spray is inhibited from reaching the member to be lubricated. Said control means are such as to cause the operation of an alarm, stop the operation of the member to be lubricated, or try to eliminate the cause of the unsufficient speed.

The invention will be more clearly understood from the following detailed description, given by mere way or unrestrictive example, of a preferred embodiement thereof, as shown in the accompanying drawings, in which:

Fig. 1 is a longitudinal sectional view of the apparatus;

Fig. 2 is a sectional view taken along line A-A of Fig.1;

Fig. 3 is a fragmentary sectional view taken along line B-B of Fig. 1; and

Fig. 4 is a sectional view taken along line C-C of Fig.3.

Referring to the figures of the accompanying drawings, reference numeral 1 denotes as a whole the nozzle providing according to,given rates a spray 2 of lubricant (for example, grease) to a gear, chain or other mechanical member to be lubricated. The nozzle has an outer cylindrical body 3 fitted with a cylindrical transverse hole 4, having rotatably mounted therein a small cylinder 5 with a shaped hole 6 passing therethrough and determining the spray shape or spatial form.

A ring 9 is slidably mounted in said body 3, having one end conjugated with the contour of said small cylinder 5 and by which it resiliently insists on the latter. A compression spring 10 presses on ring 9 and reacts on a ring 11 screwed in the internally threated end of body 3. A small block 14 is externally threaded and screwed in a threaded hole 13 at one end of said body comprising the body of a slide or di - stributing valve denoted as a whole at 15.

This small block is passed through by a substantially axial hole 16 having threaded enlarged ends. A passage starts from this hole, with the passage 17 leading to the nozzle and involving the above described members. At one end of hole 16 a plug 18 is screwed and centrally drilled at 19 to form an air passage and on which the end of a compression spring 20 reacts.

This spring insists on a collar 21 of a sliding valve member 22 having a depressed intermediate length 23.

At one end said valve member 22 has a piston head 24 which is accomodated and sealingly movable in the other enlarged end 25 of hole 16. This end is closed by a screwed connecting body 26, to the axial hole 28 of which a conduit 29 is connected and leads to an electromagnetic three-way valve 30, the purpose of which will be further explained inthe following;

At some distance from passage 17, a cylindrical chamber 31 of a pneumatically operated piston pump, denoted as a whole at 32, opens into the hole 23 of small block 14. In the hole 16 of this small block 14 (see also Fig. 2), at 2 locations 100,101,diametrically opposite but interconnected by a duct 101A,there opens a channel 102 connected through a check valve 103 to a lubricant source 104 supplying the pressure through a pump 105; reference numeral 110 denotes a return conduit controlled byan overpressure valve 111 and reference numeral 170 denotes a filter.

The pump 32 comprises a cylindrical body 33 screwed at one end in said small block 14 and at the other end in one of the heads of a drive cylinder 34. This head is denoted at 35, while the opposite head is denoted at 36. A piston, 37 is slidably mounted in said cylinder 34 and provided with seals 38A to which a punger 40 is connected, this punger 40 operating within the pumping chamber 31.

A threaded rod 38 is screwed in head 36 and can be clamped at any taken position by a stop ring nut 39 and projecting internally of cylinder 34.

On a step 40A of this rod 38 there bears the end eyelet 41 of a square bent body 42 retained but capable of relative rotation between said rod 38 and body 42 by a threaded plug 43 which is screwed on the threaded depressed end 44 of the rod, which has a square blind 45 for controlling the displa-

cement thereof.

At its free end the body 42 is connected to a slider 46, in which a reed contact 47 is carried. The slider 46 is movable along guides 48 arranged on the cylinder 36 in the longitudinal direction thereof. The contact 40 is operated by a permanent magnet 49 embedded within piston 37; such a magnet further operates, as explained in the following, a second reed contact 50 at the position of bottom end of stroke of piston 37.

A threaded hole 51 is provided in head 36 where the end connection of a conduit 52 is screwed and terminated on a pneumatic three-way valve 53 connecting such a conduit with either atmosphere A or a source of compressed air B.

At the right enlarged zone or chamber 25 of hole 16 of said small block 14, adjacent the connecting element 26, there is provided a threaded transverse hole 69 having connected thereto a pneumatic line 70 which through an adjustable neck 71, parallel located to a check valve 72, controls with delay in presence of pressure air in chamber 25 said pneumatic three-way valve 53.

According to an important aspect of the invention, it is contemplated that said small cylinder 5 can be rotated through 180° so that its narrowest portion is arranged within the cylindrical body 3 containing it, and the outward widest postion. Thus, the lubricant supplied by pump 32 removes the deposits and occlusions modifying the shape of the spray, or inhibiting the latter. Upon removal, the small cylinder is then moved back to starting position.

0140265

In order to obtain this rotation, it is provided that on one side said small cylinder 5 has a projecting square extension 80, inserting in a conjugated hole in the rotor 81 of a pneumatic motor 82 secured by any known means, such as by means of screws on a levelled side of body 3. This motor comprises a stator including a pair of plates 83, 84 having the rotor supported in coaxial central apertures thereof. The stator also comprises a ring 87, interposed and clamped between the two plates 83, 84. By means of a key 88, an annular segment 89 is integral with ring 87, thereby forming part of the stator and which along with further stator parts defined a chamber 90, in the form of a ring segment and in which a sector 85 moves and is connected by key 86 to the central portion or hub of motor 81.

Two ports 91, 92 are provided in the stator ring 87, as angularly offset and opening at grooves 93 of sector 89, such ports open in chamber 90 from opposite sides of sector 85. Through electromagnetic three-way valves 130, 131, said ports 91, 92 are connectable with either the atmosphere A or the source of compressed air B, and particularly when one is connected with source B the other is connected with atmosphere A.

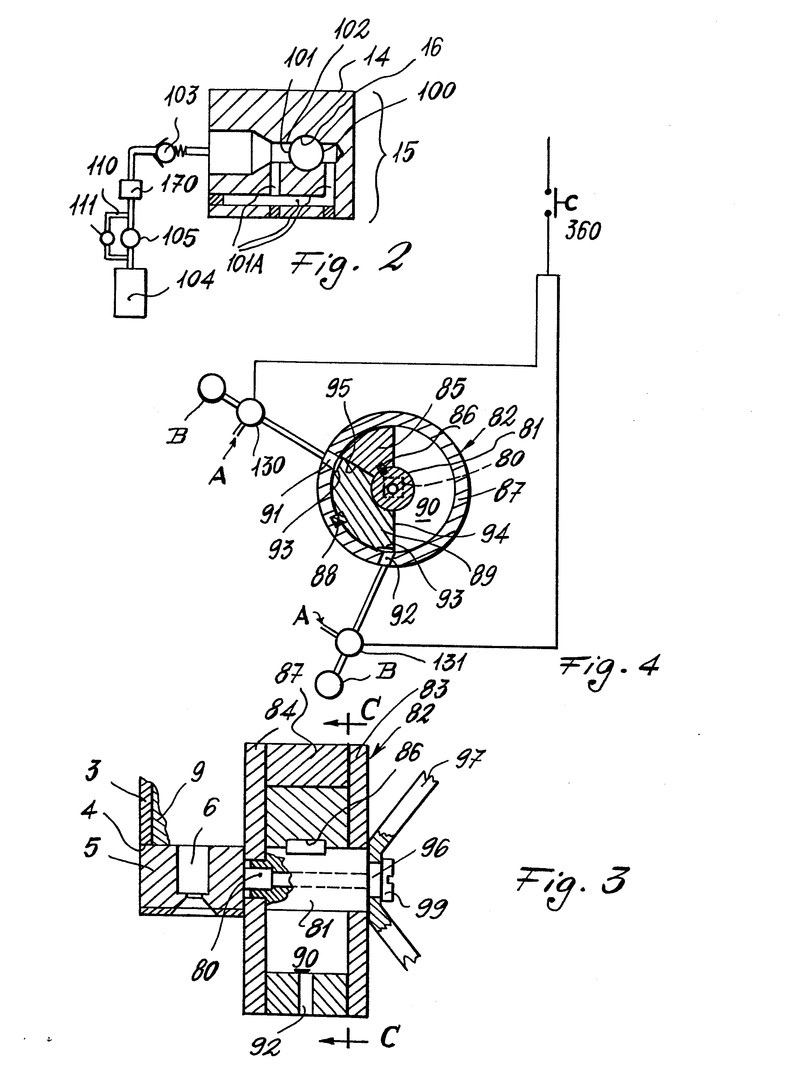

It is evident that at the position of Fig. 4 should compressed air be supplied to port 91, the sector 85, from the edge 95 of annular segment 89, will be caused by this air to clockwise rotate in chamber 90 until striking against the other edge 94 of said segment 89. The opposite situation occurs when said compressed air is supplied to port 92. To obtain a rotation of 180° of said rotor 81, and hence of small cylinder 5 of nozzle 1, the angular extension of said annular segment 89 added to that of sector 85 will also be of 180°.

0140265

In order that small cylinder 5 can be also manually rotated,
said rotor 81 has a square extension 96 provided with a threaded central hole on which a handle or knob 97 is slipped and
then secured by screw 99 screwed down in said hole. Of course,
the rotation of handle 97 involves a rotation of small cylinder 5 of nozzle 1.

A timer 200 is provided for controlling the apparatus
operation. Particularly, should the speed of piston 37 as well
as that of spray be too low, or should the time required by
the piston to travel the distance K between the two contacts
of end of stroke 47, 50 (distance substantially coincident
with the active stroke of plunger 40) be too high and exceed
a time set on timer 200, the latter operates an alarm 201,
stops the lubricated member or machine and said lubricating device.
This time may be varied depending on the (adjustable) distance
between the two contacts of end of stroke 47, 50, that is the
amount of lubricant delivered for each active stroke of said
plunger 40. The variation of this operating time may be carried out: a) by operating on knob 240 (which by its index
will cooperate with a scale, such as graduated in lubricant
amount by active stroke), or b) by providing on the crank member 42 and extension 42A which directly or by mechanical mem-
mers is effective on timer 200 changing the operating time
thereof as a function of the preselected distance between the
two contacts 47,50.

Such an operating time is that time during which a pumping is effected. Since a dwell time will occur between one
and the other pumping, which can be modified by the operator,
the timer as used herein, in addition to adjusting the operating time, also enables to adjust the dwell time, for example by another knob 202 or the like.

The operation of the described apparatus is as follows.

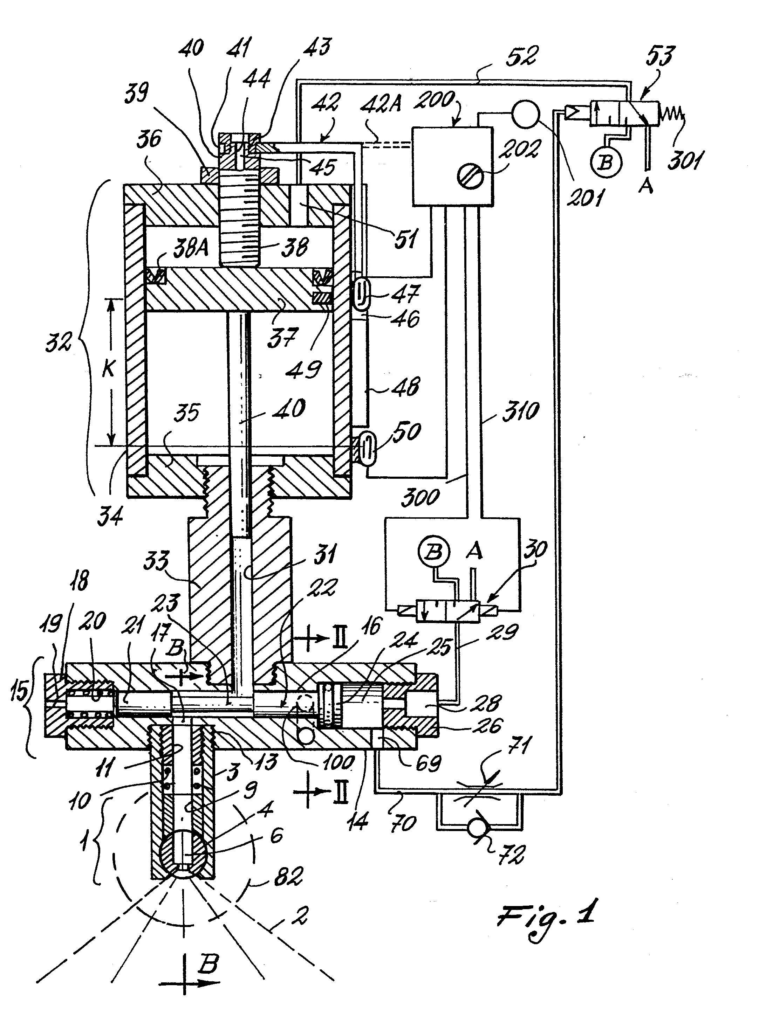

Under the conditions of Fig. 1, at the elapse of dwell time, the pump 32 is commencing the pumping stroke, which means that through valve 53 the line 52 is connected to the compressed air source B, to which (however through line 29 and chamber or valve 30) also chamber 25 is connected, so that the valve member 22 is fully leftward displaced (as shown in said figure).

Then, piston 37 is lowered and plunger 40 supplies the lubricant in chamber 31 at a high pressure to nozzle 1(which is due to the high ratio between the area of pistons 37 and 40) exiting from the hole 6 of which in the form of spray 2.

When piston 37 arrives at bottom end of stroke, its magnet 49 operates on the proximity contact 50, which is connected with timer 200 and causes the operating time to be zeroed. Should said contact 50 operate when dwell time elapses or after such a maturity, this would mean that the spray speed is lower than the preset speed, and then the timer 200 operates the alarm 201, in the case stops the lubricated member and stops the sprayer.

Should the operation of contact 50 occur before maturity of operating time, there will appear a signal on the electric line 300 (connecting one of the exciting coils of electromagnetic valve 30 to timer 200), which signal controls such a valve to connect the conduit 29 with atmosphere A. Since

0140265

also the conduit 70 is thereby connected to atmosphere, the threeway valve 53 is displaced to its other operative condition under the bias of return spring 301. Under these conditions, said valve 52 connects said conduit 52 with atmosphere A.

In case of failure of pressure in chamber 25, said distributing valve 22 is rightward displaced under the bias of spring 20.

Then, the connection between the pumping chamber 31 and nozzle 1 is cut off. The depressed zone 23 of said vale 22, being now at the ports 100, 101, causes the pressure grease to flow from source 104 into chamber 31, with piston 37 lifting until striking against the adjustable stop 38.

Upon lifting, said piston 37 causes a change in state of reed contact 50, thus trigging the dwell time in said timer.

Upon elapse of dwell time, since the piston 37 is already at the position of Fig. 1 and being the state of contact 47 changed, the timer starts the operating time by applying a signal on the output line 310, while the signal on line 300 disappears. As a result, the pneumatic valve 30 changes its state and connects the conduit 29 with the compressed air source B. As a result, pressure air through the line 29 arrives at the right side of distributing valve 22 which accordingly moves to the left taking the position of Fig. 1. With some delay, as required for leftward displacement of distributing valve 22 and due to the provision of the adjustable neck 71, the pressure is brought from line 70 to valve 53, thus connecting the compressed air source 8 with hole 51, which is lowered along with piston 37 and repeats the above described operative cycle.

Should the active stroke K be effected in a higher time than the operating time set on timer 200, it would mean that some anomalous fact has occurred. In most cases, such an anomalous fact will comprise partial occlusion of nozzle 1 due to building up of foreign bodies or dirt.

In order to remove such occlusions, the small cylinder is rotated either manually or by means of the pneumatic motor. In the case of the pneumatic motor, when the operator perceives the alarm signal, he will close the electric contact 360 (see Fig. 4) acting on valves 130 and 131 and releases the sprayer device.

This causes a rotation through 180° of small cylinder 5, thus inwardly bringing the narrow zone of hole 6, outwardly moving the widest portion of said hole. A new active stroke is effected, during which the deposits are forcibly removed from the small cylinder by the incoming lubricant. After a premeditated number of operative cycles and after release of contact 360, should the alarm signal be absent, the whole cycle can be normally repeated; otherwise the above described block would occur. These operations could also be assigned to timer 200, as automatically effected thereby upon elapse of the set operating time.

CLAIMS:

1. An apparatus for spray lubrication of metered amounts of lubricant through a nozzle, characterized in that to provide a spray without use of compressed air; it comprises in addition to the nozzle (1) also a pump (32) of differential piston type (37,40) operated by pressure fluid to supply the lubricant at high pressure to said nozzle (1), as well as a valve (15) alternately connecting the pump( 32) with either the nozzle (1) or a pressure lubricant source (104, 105).

2. An apparatus as claimed in Claim 1,characterized by comprising means (200) for controlling the movement speeds of the pump (32).

3. An apparatus as claimed in claims 1 and 2, characterized in that said valve (15) is operated by pressure fluid against a spring (20) and controls the supply of drive pressure fluid to the pump (32)through a delay line (70,71).

4. An apparatus as claimed in Claims 1 and 2, characterized in that said nozzle (1) comprises at the outlet a cylinder (5) rotatably carried about its longitudinal axis.

5. An apparatus as claimed in Claim 4,characterized by providing a pressure fluid motor (82) coupled to said cylinder for the rotation of the latter (5).

6. An apparatus as claimed in the claim 5 characterized in that said small cylinder (5) is manually operated through a handle (97) coupled to the small cylinder.

7. An apparatus as claimed in Claims 5 and 6, characterized in that said handle (97) is coupled to the small cylinder (5) through the pressure fluid motor (82).

8. An apparatus as claimed in Claim 1, characterized in that said differential piston (37, 40) operates on reed sensors (47, 50), of which one of end of stroke for the displacement of the distributing valve (15) in the direction of the spray generation and the other for metering the lubricant supplied by the pump (32) at each active stroke;

9. An apparatus as claimed in Claims 1 and 2, characterized in that said control means (200) are variable depending on the stroke of the pump and supply a signal if the active stroke is not effected in a predetermined time.

Fig. 1

0140265

Fig. 2

Fig. 3

Fig. 4